**Europäisches Patentamt**

**European Patent Office**

**Office européen des brevets**

(19)

(11) Veröffentlichungsnummer : **0 568 521 A1**

## (12) EUROPÄISCHE PATENTANMELDUNG

(21) Anmeldenummer : 93890075.0

(22) Anmeldetag : 07.04.93

(51) Int. Cl.⁵ : **G01N 9/00**

(30) Priorität : **29.04.92 AT 884/92**

(43) Veröffentlichungstag der Anmeldung :
**03.11.93 Patentblatt 93/44**

(84) Benannte Vertragsstaaten :
**AT BE CH DE DK ES FR GB GR IE IT LI LU MC
NL PT SE**

(71) Anmelder : **Leopold, Hans, O. Univ.-Prof. Dr.
Sonnleitenweg 17
A-8043 Graz (AT)**

(71) Anmelder : **Stabinger, Hans, Dr.
Peterstalstrasse 156
A-8042 Graz (AT)**

(72) Erfinder : **Leopold, Hans, O. Univ.-Prof. Dr.
Sonnleitenweg 17
A-8043 Graz (AT)**
Erfinder : **Stabinger, Hans, Dr.
Peterstalstrasse 156
A-8042 Graz (AT)**

(74) Vertreter : **Gibler, Ferdinand, Dipl.Ing. Dr.
techn.
Dorotheergasse 7/14
A-1010 Wien (AT)**

(54) **Vorrichtung zur Bestimmung der Dichte.**

(57)    Vorrichtung zur Bestimmung der Dichte von Flüssigkeiten und Gasen aus der Periodendauer eines mit einem Präparat gefüllten Schwingers (1), zu dessen Anregung ein Erregerverstärker (13) vorgesehen ist, der mit einem die Schwingungen des Schwingers (1) aufnehmenden Sensor (2) verbunden ist und dessen Signale verstärkt, die einem ausgangsseitig des Erregerverstärkers (13) angeordneten und den Schwinger antreibenden Wandler (7) zuführbar sind. Um eine Kompensation des Einflusses der Viskosität der zu untersuchenden Probe zu ermöglichen, ist vorgesehen, daß mindestens ein über einen Umschalter (4) in den Erregerverstärker (13) schaltbarer, eine Phasenverschiebung bewirkender Schaltkreis (5, 6) und ein eine Phasenumkehr bewirkender schaltbarer Inverter (14) zum Zweck der Anregung von Schwingungen höherer Ordnung vorgesehen ist.

Fig. 5

EP 0 568 521 A1

Die Erfindung bezieht sich auf eine Vorrichtung zur Bestimmung der Dichte von Flüssigkeiten und Gasen aus der Periodendauer eines mit einem Präparat gefüllten Schwingers, zu dessen Anregung ein Erregerverstärker vorgesehen ist, der mit einem die Schwingungen des Schwingers aufnehmenden Sensor verbunden ist und dessen Signale verstärkt, die einem ausgangsseitig des Erregerverstärkers angeordneten und den Schwinger antreibenden Wandler zuführbar sind.

Eine solche Vorrichtung wurde z.B. durch die AT-PS 331 539 bekannt. Bei dieser Einrichtung ist ein Kreis zur Entdämpfung, der im wesentlichen aus einem Verstärker und einem Begrenzer besteht, und ein weiterer Kreis zur temperaturabhängigen Verstimmung der Resonanzfrequenz des Schwingers vorgesehen. Dieser besteht aus einer temperaturabhängigen Widerstandsbrücke, einem Summierverstärker und Integratoren zur Phasendrehung.

Bei dieser bekannten Einrichtung ist es daher möglich eine Erregung des Schwingungsgebildes und eine Verstimmung der Resonanzfrequenz zu erreichen, wodurch eine Temperaturkompensation und/oder eine Gegenmassenkompensation erreicht werden kann, letztere um für die Berechnung der Dichte das dieser zugrundeliegende Modell eines Koppelschwingersystems "Gegenmasse-Feder-Meßschwinger" auf das theoretisch ideale, einfache Schwingersystem "Feder-Schwingmasse" zurückzuführen.

Der Schwinger mit der in diesem enthaltenen zu untersuchenden Probe stellt ein Schwingungsgebilde dar, das so ausgebildet ist, daß ein definiertes Volumen des zu untersuchenden Präparates an der Schwingung teilnimmt und daher die Periodendauer $\tau$ beeinflußt. Dabei kann die Periodendauer $\tau$ eines solchen Schwingungsgebildes nach der folgenden Gleichung (1) berechnet werden.

$$\tau = 2\pi \sqrt{\frac{M_o + \int V}{c}} \quad (1)$$

Darin bedeuten $M_o$ die Masse des leeren Schwingers, c seine elastische Konstante, $\int$ die Dichte und V das Volumen des an der Schwingung teilnehmenden Präparates. Die Quotienten $M_o/c$ und $V/c$ können als schwingerspezifische Apparatekonstante betrachtet werden.

Nach Umformung und Definition einfacher Konstanten A und $T_o$ erhält man die folgende Gleichung (2):

$$\int = \frac{1}{A} (T^2 - T_o^2) \quad (2)$$

Dabei ist T ein ganzzahliges Vielfaches der Periodendauer $\tau$, $T_o$ ein um denselben Faktor vermehrtes Vielfaches der Periodendauer $T_o$ des leeren Schwingers. Die Faktoren A und $T_o$ werden ermittelt, indem die Gleichung (2) für zwei bekannte Werte von $\int$ und T aufgestellt und nach A und $T_o$ gelöst wird.

Besteht das Schwingungsgebilde, wie bei der bekannten Lösung, aus einem ein- oder beidseitig eingespannten schwingendem Rohr, in dem die zu messende Substanz eingeschlossen ist, so gelten die Gleichungen (1) und (2) nur für nicht-viskose Flüssigkeiten. Bei viskosen Flüssigkeiten gegebener Dichte wird eine größere Periode beobachtet.

Aufgabe der Erfindung ist es daher eine Einrichtung der eingangs erwähnten Art vorzuschlagen, die es ermöglicht den Einfluß der Viskosität der zu untersuchenden Probe zu korrigieren.

Erfindungsgemäß wird dies dadurch erreicht, daß mindestens ein über einen Umschalter in den Erregerverstärker schaltbarer, eine Phasenverschiebung bewirkender Schaltkreis vorgesehen ist und daß mindestens zwei voneinander in axialer Richtung des Schwingers distanziert angeordnete Wandler zum Zweck der Ausbildung von Schwingungen nullter und höherer Ordnung vorgesehen sind.

Auf diese Weise ist es möglich den Schwinger mit in verschiedenen Phasenlagen zu den Schwingungen desselben liegenden Signalen anzuregen und zwar ergeben wegen der erfindungsgemäßen möglichen höheren Resonanzfrequenzen ergeben Schwingungen höherer Ordnung einen größeren Viskositätseinfluß in einem weiteren Bereich, in dem die Dämpfung monoton steigend von der Viskosität abhängt, als die Grundschwingung. Daraus folgt, daß die Schwingungen höherer Ordnung vorteilhafterweise für die Bestimmung des Viskositätseinflußes auf die Dichtemessung verwendet werden, während die Grundschwingung vorteilhafterweise wegen ihres minimalen viskositätsbedingten Dichtemeßfehlers zur Dichtemessung verwendet wird.

Wird nun ein Schwingungsgebilde durch eine harmonische Krafteinwirkung in Phase mit seiner Geschwindigkeitsamplitude erregt, so stellt sich die natürliche Resonanzfrequenz ein, da die geschwindigkeitsabhängige Dämpfkraft vollständig von der Erregerkraft aufgehoben wird. Stimmt jedoch die Phasenlage der erregenden Kraft nicht mit jener der Dämpfkraft überein, so ergibt sich eine Resonanzfrequenz des Schwingungsgebildes, die von der natürlichen um einen Betrag ungefähr proportional zur Größe der Dämpfkraft und Phasendifferenz zwischen Erreger- und Dämpfkraft abweicht.

Daraus ergibt sich, daß die Dämpfkraft aus der Verstimmung des Schwingungsgebildes ermittelt werden kann, die sich ergibt, wenn das Schwingungsgebilde nacheinander mit Erregerkräften unterschiedlicher Phasen angeregt wird.

Wird der die zu untersuchende Probe enthaltende Schwinger mit Signalen unterschiedlicher Phasenlage angeregt, ergeben sich zwei Resonanzfrequenzen, die erfaßt werden und aus denen sich nach der folgenden Gleichung (3) die Dämpfungskonstante errechnen läßt.

$$b = \frac{f_2^2/f_1^2 - 1}{tg\,ø_1 - tg\,ø_2} \quad (3)$$

Dabei bedeuten b die Dämpfungskonstante, $r_1$ und $r_2$ are Resonanzfrequenzen, $ø_1$ und $ø_2$ die dazugehörigen Phasendifferenzen zwischen dem Erregersignal und der Bewegung des Schwingers.

Die Abhängigkeit des durch die Viskosität bedingten relativen Meßfehlers der Dichten $\Delta\!\int\!/\!\int$ von der Dämpfungskonstanten b kann experimentell ermittelt werden. Dazu können Präparate unterschiedlicher Viskosität und bekannter Dichte in das Schwingungsgebilde eingebracht und die zwei Resonanzfrequenzen gemessen werden. Daraus kann für jedes Präparat der viskositätsbedingte Dichtemeßfehler $\Delta\!\int\!/\!\int$ und die zugegörige Dämpfkonstante b errechnet werden.

Nach einem weiteren Merkmal der Erfindung kann vorgesehen sein, daß mit dem Erregerverstärker weiters mindestens zwei, vorzugsweise drei Frequenzmeß- und Speicherkreise verbindbar sind.

Auf diese Weise lassen sich die Resonanzfrequenzen einfach messen und speichern und können zur weiteren Verarbeitung aus diesen Kreisen abgerufen werden.

Weiters kann vorgesehen sein, daß die beiden Umschalter von einem Mikroprozessor gesteuert sind, der mit den Frequenzmeß- und Speicherkreisen verbunden und vorzugsweise mit einer Dichteanzeige verbunden ist.

Auf diese Weise ergibt sich die Möglichkeit einer einfachen und raschen Auswertung der Messungen.

Weiters kann vorgesehen sein, daß im Erregerverstärker ein von einem Mikroprozessor gesteuerter Inverter vorgesehen ist, durch welchen die Phasenlage um 180° drehbar ist.

Damit wird auf einfache Weise eine Ansteuerung der Wandler sichergestellt, durch die die Schwingung des Schwingers in zumindest zwei Ordnungen der Schwingung aufrecht erhalten wird.

Dabei kann weiters vorgesehen sein, daß der schaltbare Inverter durch eine Parallelschaltung eines Folgers und eines Inverters gebildet ist, deren Ausgänge über einen vom Mikroprozessor gesteuerten Wechsler mit den Wurzeln der beiden Umschalter verbindbar sind.

Nach einem anderen Merkmal der Erfindung kann vorgesehen sein, daß daß der schaltbare Inverter durch einen als Inverter geschalteten Operationsverstärker gebildet ist, dessen nicht-invertierender Eingang über einen Widerstand mit dem Eingang der Inverterstufe verbunden ist und über einen vom Mikroprozessor gesteuerten Schalter (S) wahlweise mit einem festen Potential, z.B. Masse verbindbar oder von dieser trennbar ist, wobei der Ausgang dieses Inverters mit den Wurzeln der beiden Umschalter verbindbar sind.

Durch diese Maßnahme ergibt sich eine in konstruktiver Hinsicht sehr einfache Lösung.

Die Erfindung wird nun anhand der Zeichnung näher erläutert. Dabei zeigen:

Fig. 1 ein Diagramm des Dichtemeßfehler $\Delta\!\int\!/\!\int$ in Abhängigkeit von der Viskosität bei Erregung in der Grundschwingung,

Fig. 2 ein Diagramm der Dämpfungskonstante b in Abhängigkeit von der Viskosität bei Erregung in der Grundschwingung

Fig. 3 ein Diagramm in dem die Diagramme nach den Fig. 1 und 2 kombiniert sind,

Fig. 4 eine Ausführungsform einer Vorrichtung, bei welcher nur die Grundschwingung angeregt werden kann,

Fig. 5 eine Ausführungsform einer erfindungsgemäßen Vorrichtung, bei welcher Grundschwingung und Oberschwingung angeregt werden können,

Fig. 6 ein Diagramm der Dämpfungskonstante b in Abhängigkeit von der Viskosität bei Erregung in der ersten Oberschwingung,

Fig. 7 ein Diagramm des Dichtemeßfehlers in Abhängigkeit von der Dämpfungskonstanten b, wie es aus der Kombination der Diagramme aus den Fig. 1 und 6 hervorgeht,

Fig. 8 und 9 Ausführungsformen eines schaltbaren Inverters.

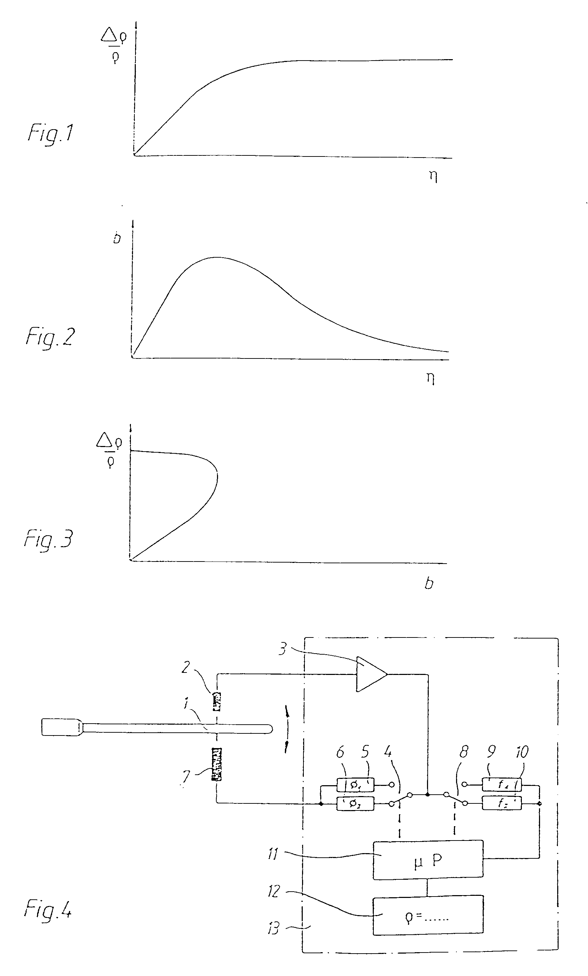

Aus der Fig. 1 ist zu ersehen, daß der Dichtemeßfehler $\Delta\!\int\!/\!\int$ bei Messung der Dichte in der Grundschwingung mit steigender Viskosität η zuerst im wesentlichen linear ansteigt und dann über einen gekrümmten Verlauf in einen Sättigungsbereich übergeht, in dem der Dichtemeßfehler mit weiter steigender Viskosität der zu untersuchenden Probe nur mehr wenig ansteigt.

Die Fig. 2 zeigt den Verlauf der Dämpfungskonstante b bei Messung der Dichte in der Grundschwingung in Abhängigkeit von der Viskosität η . Aus diesem Diagramm ergibt sich, daß die Dämpfungskonstante im Bereich niedriger Viskosität mit steigender Viskosität η relativ steil ansteigt und nach einem Übergangsbereich relativ sanft abfällt.

Die Fig. 3 zeigt das sich aus der Kombination der beiden Diagramme nach den Fig. 1 und 2 ergebende Diagramm des Dichtemeßfehlers $\Delta\!\int\!/\!\int$ in Abhängigkeit von der Dämpfungskonstante b. Dabei zeigt sich, daß die Beziehung zwischen dem Dichtemepfehler und der Dämpfungskonstante zweideutig ist, die auf die Abnahme der Dämpfung bei hoher Viskosität zurückzuführen ist. Durch die Messung des Viskositätseinflusses in der ersten oder einer höheren Oberschwingung kann der Bereich der Zweideutigkeit aus dem Bereich der technisch wichtigen Flüssigkeiten zu höheren Viskositäten verschoben werden (siehe Fig. 7).

Die Fig. 4 zeigt schematisch eine Vorrichtung, bei welcher der Schwinger 1, der mit der zu untersuchenden Probe füllbar ist, mittels eines Wandlers 7 in Schwingung versetzbar ist. Dabei wandelt der Wandler 7 elektrische Signale in Kräfte um, die den Schwinger erregen.

Die Schwingungen des Schwingers 1 werden von einem Sensor 2 aufgenommen und von diesem in elektrische Signale umgesetzt, die einem Verstärker 3 des Erregerverstärkers 13 zugeführt werden. Die verstärkten Signale gelangen zu den Eingängen zweier Umschalter 4 und 8.

Bei der dargestellten Ausführungsform schaltet der Umschalter 4 wahlweise auf einen von zwei Schaltkreisen 5, 6 um, die parallel zueinander geschaltet und ausgangsseitig mit dem Wandler 7 verbunden sind. Diese Kreise 5, 6 bewirken eine Phasenverschiebung der den Wandler 7 zugeführten Signale gegen über den Schwingungen des Schwingers 1, bzw. den Ausgangssignalen des Sensors 2, wobei das Ausmaß der Phasenverschiebung, das der Kreis 5 bewirkt von jenem das der Kreis 6 bewirkt verschieden ist. Diese Kreise können z.B. durch Tiefpässe gebildet sein.

Durch Umschaltung von einem Kreis 5, 6 auf den anderen ergeben sich andere Resonanzfrequenzen des Schwingers 1, die von den an dem Umschalter 8 angeschlossenen Frequenzmeß- und Speicherkreise 9, 10 erfapt und gespeichert werden, wobei in einem dieser Kreise 9, 10 die bei Einschaltung des einen Kreises 5, 6 sich ergebende Resonanzfrequenz erfaßt und gespeichert wird und im zweiten Kreis 9, 10 die sich bei Einschaltung des zweiten Kreises 5, 6 ergebende Resonanzfrequenz erfaßt und gespeichert wird. Dabei erfolgt die Steuerung der beiden Umschalter 4, 8 durch einen Mikroprozessor 11, der mit den Ausgängen der Frequenzmeß- und Speicherkreise 9, 10 verbunden ist.

Dieser Mikroprozessor 11 wertet die in den Kreisen 9, 10 erfaßten, bzw. gespeicherten Werte entsprechend den Gleichungen (1), (2) und (3) aus und errechnet die Dichte der untersuchten Probe. Diese wird in der Dichteanzeige 12, die mit dem Mikroprozessor 11 verbunden ist, angezeigt.

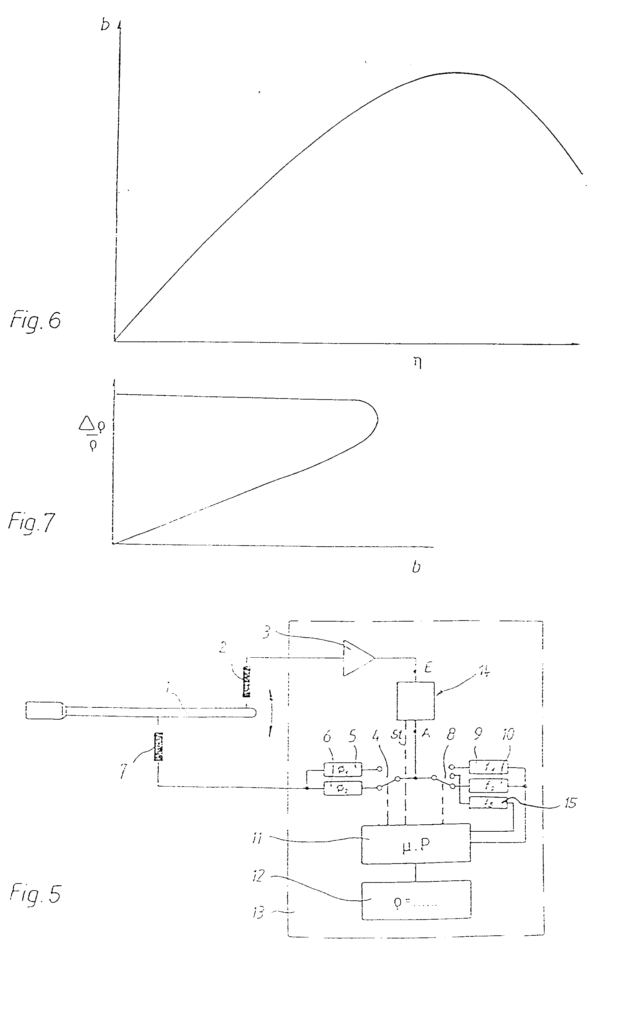

Die Ausführungsform der erfindungsgemäßen Vorrichtung nach der Fig. 5 unterscheidet sich von jener nach der Fig. 4 dadurch, daß zwei voneinander in axialer Richtung des Schwingers 1 distanzierte Wandler 2, 7 vorgesehen sind, durch die der Schwinger in Abhängigkeit von der Stellung des schaltbaren Inverters 14 sowohl in der Grundschwingung als auch in der ersten Oberschwingung erregt werden kann.

Dazu ist zwischen dem Verstärker 3 und den Wurzeln der beiden Umschalter 4 und 8 ein schaltbarer Inverter 14 zwischengeschaltet, der vom Mikroprozessor 11 gesteuert ist und zur Umkehr der Phasenlage um 180° dient. Weiters ist ein weiterer Schaltkreis 15 vorgesehen, der über den Umschalter 8 schaltbar ist und der eine Frequenz f3 mißt.

Mit der Einrichtung nach Fig. 5 ist es möglich, den Schwinger 1 in der Grundschwingung in der Phasenlage ø1, in der ersten Oberschwingung in der Phasenlage ø1 und in der ersten Oberschwingung in der Phasenlage ø2 anzuregen. Diesen Moden entsprechen die Frequenzen f1, f2 und f3, welche von den Frequenzmeß- und Speicherschaltungen 9, 10 und 15 erfaßt und gespeichert werden.

Die Dämpfungskonstante b in der ersten Oberschwingung ergibt sich aus:

$$b = \frac{\frac{f_3^2}{f_2^2} - 1}{tg\,\phi_1 - tg\,\phi_2} \qquad (4)$$

Aus der Frequenz f1 der Grundschwingung wird nach Gleichung (2) die Dichte der Flüssigkeit berechnet. Vorteilhafterweise wird der Grundschwingungsmessung zeitlich folgend die Dämpfungskonstante b gemessen, indem der Inverter 14 in den Oberschwingungsmodus schaltet und über die beiden Phasendrehkreise 5, 6 die Frequenzen f2 und f3 ermittelt werden. Aus dem experimentell beobachteten relativen Dichtemeßfehler $\Delta\!\int\!/\!\int$ und der zugehörigen Dämpfungskonstante b wird eine Beziehung entwickelt, die es gestattet, bei einer Messung an viskosen Flüssigkeiten den Dichtefehler zu korrigieren.

Die Fig. 8 und 9 zeigen verschiedene Ausführungsformen eines schaltbaren Inverters 14.

Bei der Ausführungsform nach der Fig. 8 weist dieser eine Parallelschaltung zweier Operationsverstärker 16, 17 auf, von denen der erstere als Folger und der letztere als Inverter geschaltet ist.

Je nach der Stellung eines vom Mikroprozessor 11 gesteuerten Schalters S wird am Ausgang A des schaltbaren Inverters 14 die nicht invertierte oder die invertierte Eingangsspannung abgegeben. Wie aus der Fig. 5 zu ersehen ist, ist der Ausgang A des schaltbaren Inverters 14 mit den Wurzeln der beiden Umschalter 4, 8 verbunden.

Bei der Ausführungsform nach der Fig. 9 ist lediglich ein als Inverter geschalteter Operationsverstärker 18 vorgesehen, dessen nicht-invertierender Eingang mit einem Widerstand mit dem Eingang E verbunden ist, der über den vom Mikroprozessor 11 gesteuerten Schalter S mit einem festen Potential (Masse) verbind- und von diesem trennbar ist. Dadurch ist am Ausgang A des schaltbaren Inverters 14 je nach der Stellung des Schalters S die nicht invertierte oder invertierte Eingangsspannung abgreifbar.

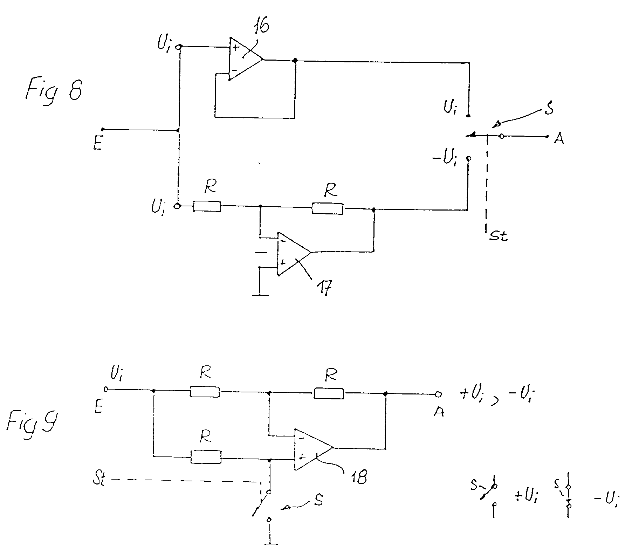

Wie aus der dem Diagramm der Fig. 6 zu ersehen ist, in dem der Verlauf der Dämpfungskonstante b in Abhängikeit von der Viskosität n dargestellt ist, zu ersehen ist, ergibt sich bei einer Anregung des Schwingers 1 mit einer Schwingung der ersten-Ordnung, verglichen mit einer Anregung einer Schwingung der 0-ten Ordnung ein wesentlich größerer Bereich der Viskosität, in dem die Dämpfungskonstante b monoton ansteigt und daher zur Messung benützt werden kann.

Desgleichen ergibt sich, wie aus der Fig. 7 zu ersehen ist, ein wesentlich größerer Bereich der Viskositätskorrektur.

## Patentansprüche

1. Vorrichtung zur Bestimmung der Dichte von Flüssigkeiten und Gasen aus der Periodendauer eines mit einem Präparat gefüllten Schwingers (1), zu dessen Anregung ein Erregerverstärker (13) vorgesehen ist, der mit einem die Schwingungen des Schwingers (1) aufnehmenden Sensor (2) verbunden ist und dessen Signale verstärkt, die einem ausgangsseitig des Erregerverstärkers (3) angeordneten und den Schwinger antreibenden Wandler (7) zuführbar sind, **dadurch gekennzeichnet**, daß mindestens ein über einen Umschalter (4) in den Erregerverstärker (13) schaltbarer, eine Phasenverschiebung bewirkender Schaltkreis (5, 6) vorgesehen ist und daß mindestens zwei voneinander in axialer Richtung des Schwingers (1) distanziert angeordnete Wandler (2, 7) zum Zweck der Ausbildung von Schwingungen nullter und höherer Ordnung vorgesehen sind.

2. Vorrichtung nach Anspruch 1, **dadurch gekennzeichnet**, daß mit dem Erregerverstärker (13) weiters mindestens zwei, vorzugsweise drei Frequenzmeß- und Speicherkreise (9, 10) verbindbar sind.

3. Vorrichtung nach Anspruch 1 oder 2, **dadurch gekennzeichnet**, daß die beiden Umschalter (4, 8) von einem Mikroprozessor (11) gesteuert sind, der mit den Frequenzmeß- und Speicherkreisen (9, 10) verbunden und vorzugsweise mit einer Dichteanzeige (12) verbunden ist.

4. Vorrichtung nach Anspruch 1, 2 oder 3, **dadurch gekennzeichnet,** daß im ErregerverstarKer (13) ein von einem Mikroprozessor gesteuerter Inverter (14) vorgesehen ist, durch welchen die Phasenlage um 180° drehbar ist.

5. Vorrichtung nach Anspruch 4, dadurch gekennzeichnet, daß der schaltbare Inverter (14) durch eine Parallelschaltung eines Folgers (16) und eines Inverters (17) gebildet ist, deren Ausgänge über einen vom Mikroprozessor (11) gesteuerten Wechsler (S) mit den Wurzeln der beiden Umschalter (4, 8) verbindbar sind.

6. Vorrichtung nach Anspruch 4, dadurch gekennzeichnet, daß der schaltbare Inverter (14) durch einen als Inverter geschalteten Operationsverstärker (18) gebildet ist, dessen nicht-invertierender Eingang über einen Widerstand mit dem Eingang der Inverterstufe verbunden ist und über einen vom Mikroprozessor (11) gesteuerten Schalter (S) wahlweise mit einem festen Potential, z.B. Masse verbindbar oder von dieser trennbar ist, wobei der Ausgang dieses Inverters (18) mit den Wurzeln der beiden Umschalter (4, 8) verbindbar sind.

Fig.1

Fig.2

Fig.4

Fig. 6

Fig. 7

Fig. 5

Fig 8

Fig 9

Europäisches
Patentamt

# EUROPÄISCHER RECHERCHENBERICHT

Nummer der Anmeldung

EP    93 89 0075

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 023 400 (NOVEMBER) <br> * Zusammenfassung; Abbildungen * <br> * Spalte 8, Zeile 1 - Spalte 10, Zeile 27 * | 1,2,4 | G01N9/00 |
| A | US-A-4 297 872 (IKEDA ET AL.) <br> * Spalte 1, Zeile 36 - Spalte 6, Zeile 4; Abbildungen 1-4 * <br> * Spalte 8, Zeile 62 - Spalte 9, Zeile 27; Abbildung 10 * | 1 | |
| A | MARCONI REVIEW <br> Bd. 43, Nr. 218, 1980, GREAT BADDOW GB <br> Seiten 156 - 175 <br> LANGDON 'Vibratory process control transducers' <br> * Seite 168 - Seite 172; Abbildung 11 * | 1,3 | |
| P,A | EP-A-0 487 499 (STABINGER ET AL.) <br> * das ganze Dokument * | 1-3 | |
| A | EP-A-0 222 503 (SCHLUMBERGER ELECTRONICS (UK) LTD) <br> * Seite 10, Absatz 2 -Absatz 3; Ansprüche 1-6; Abbildungen 1,9 * | 1 | **RECHERCHIERTE SACHGEBIETE (Int. Cl.5)** <br><br> G01N |
| A | GB-A-2 236 591 (GEC-MARCONI LTD) <br> * Seite 8 - Seite 11; Abbildungen 1,2 * | 1 | |
| A | US-A-5 005 400 (LEW) <br> * Zusammenfassung * | 1 | |

Der vorliegende Recherchenbericht wurde für alle Patentansprüche erstellt

| Recherchenort | Abschlußdatum der Recherche | Prüfer |
|---|---|---|
| DEN HAAG | 04 AUGUST 1993 | BINDON C.A. |

EPO FORM 1503 03.82 (P0403)